# EUROPÄISCHE PATENTSCHRIFT

(11) **EP 1 149 779 B1**
(45) Veröffentlichungstag und Bekanntmachung des Hinweises auf die Patenterteilung: **01.06.2005**
(21) Anmeldenummer: 01106975.4
(22) Anmeldetag: 21.03.2001
(51) Int. Cl.: B65G 15/62, B65G 21/16

(54) **Förderer, insbesondere Staurollenförderer**
Conveyor, in particular accumulating roller conveyor
Convoyeur, en particulier convoyeur-accumulateur à rouleaux

(30) Priorität: 26.04.2000 DE 10021252
(43) Veröffentlichungstag der Anmeldung: 31.10.2001
(73) Patentinhaber: Johann A. Krause Maschinenfabrik GmbH, 28777 Bremen (DE)
(72) Erfinder: Mann, Walter, 28357 Bremen (DE); Schmidt, Michael, 28790 Schwanewede (DE)
(74) Vertreter: Möller, Friedrich, Dipl.-Ing.

(56) Entgegenhaltungen:
- US-A- 3 491 873
- US-A- 5 409 096

## Beschreibung

Die Erfindung betrifft einen Förderer, insbesondere einen Staurollenförderer, für Werkstücke, Werkstückträger oder sonstige Gegenstände, gemäß dem Oberbegriff des Anspruchs 1.

Der hier angesprochene Förderer dient zum Transport von Werkstücken oder Werkstückträgem entlang von zum Beispiel Montagelinien. Es kann sich aber auch um einen Förderer zum Transport anderer (stückiger) Gegenstände handeln. Ein solcher Förderer ist vielfach als Staurollenförderer ausgebildet. Der Förderer verfügt über eine vorzugsweise im Kreislauf geführte Förderstrecke, die größtenteils durch längliche (gerade) Tragprofile gebildet wird. An den Tragprofilen stützt sich der Förderstrang, insbesondere eine Staurollenkette, ab. Der umlaufend angetriebene, endlose Förderstrang wird außerdem vom Tragprofil geführt.

Bei einem aus der US-A-5 409 096 bekannten Förderer dieser Art ist ein Aufnahmeraum im Tragprofil für den Förderstrang dauerhaft in zwei Teilräume unterteilt. Jeder dieser Teilräume nimmt ein Trum des Förderstrangs auf. Ein Untertrum des Förderstrangs ist dadurch verdeckt mit allseitig geschlossenem (unterem) Teilraum geführt. Dazu muss bei der Montage des Förderstrangs das Untertrum desselben durch die offenen Stirnseiten des Tragprofils in den im übrigen geschlossenen Teilraum geschoben werden. Das macht die Montage, Wartung und Reparatur des Förderstrangs, insbesondere der Staurollenkette, schwierig und zeitaufwendig.

Des weiteren verfügen die bekannten Förderer über unterschiedliche Funktionselemente, beispielsweise Umlenkungen (Kurven) und Weichen, die mit den verschiedenen Abschnitten der die Förderstrecke bildenden Tragprofile verbunden werden müssen. Dazu weisen die Enden der Tragprofile besondere Ausgestaltungen auf, die passend zu Verbindungsstellen der Funktionselemente ausgebildet sind. Das erfordert eine individuelle Gestaltung und Herstellung insbesondere der Enden der Tragprofile und erfordert eine Montage der Verbindungsstellen der Funktionselemente mit genau dem vorgesehenen Ende des Tragprofils. Die Montage der Förderstrecke des Förderers wird dadurch erschwert.

Hiervon ausgehend liegt der Erfindung die Aufgabe zugrunde, einen Förderer, insbesondere einen Staurollenförderer, zu schaffen, der eine einfache Montage, Reparatur und Wartung zuläßt.

Ein Förderer zur Lösung dieser Aufgabe weist die Merkmale des Anspruchs 1 auf. Dadurch, dass das Tragprofil einen an einer Längsseite offenen Aufnahmeraum aufweist, in den das obere Trum und das untere Trum des Förderstrangs von der offenen Seite her einsetzbar sind, braucht das untere Trum des Förderstrangs nicht mehr von mindestens einer offenen Stirnseite her in das Tragprofil eingeschoben zu werden. Vielmehr können sowohl das Untertrum als das Obertrum durch die offene Längsseite in den Aufnahmeraum des Tragprofils eingesetzt werden, weil dieser erfindungsgemäß auch für das Untertrum entlang seiner gesamten Längserstreckungsrichtung frei zugänglich ist. Dadurch kann der Förderstrang in das Tragprofil montiert und demontiert werden, ohne dass der endlose Förderstrang aufgetrennt werden muss.

Es ist weiterhin vorgesehen, den Aufnahmeraum durch mindestens eine Trennwand in zwei Teilräume unterteilbar auszugestalten. Dazu ist die Trennwand entweder lösbar an einer entsprechenden Stelle im Aufnahmeraum anzuordnen. Durch die lösbare Trennwand wird wie bei den bekannten Förderern ein verdeckter Teilraum zur Aufnahme des Untertrums geschlossen, wobei die Trennwand mittelbar oder unmittelbar als Auflager für das Obertrum dienen kann. Durch die Lösbarkeit der Trennwand ist es jedoch möglich, den verdeckten Teilraum zur Aufnahme des Untertrums zu öffnen. Es kann dadurch über die vorzugsweise obere offene Längsseite des Aufnahmeraums das Untertrum des Förderstrangs in das Tragprofil eingelegt oder entfernt werden. Danach wird durch Einsetzen der Trennwand in das Tragprofil der mit dem Untertrum versehene Teilraum geschlossen und es kann anschließend über die gleiche offene Längsseite des Aufnahmeraums das Obertrum des gleichen Förderstrangs in das Tragprofil, nämlich den offenen (oberen) Teilraum, eingesetzt werden.

Gemäß einer bevorzugten Ausgestaltung des Tragprofils mit übereinanderliegenden Teilräumen und verschließbarem unteren Teilraum zur Aufnahme des Untertrums des Förderstrangs wird eine Bodenwandung des oberen Teilraums durch die den unteren Teilraum verschließende Trennwand gebildet, wobei der der Trennwand gegenüberliegenden Oberseite des oberen Teilraums die offene Längsseite des Tragprofils zugeordnet ist. Dadurch ist eine besonders einfache Montage des Förderstrangs möglich, indem das Untertrum, die Trennwand und das Obertrum von oben in den Aufnahmeraum des Tragprofils einlegbar sind.

Gemäß einer bevorzugten Ausgestaltung der Erfindung sind gegenüberliegende, aufrechte Seitenwände des Aufnahmeraums mit in einer gleichen, vorzugsweise horizontalen, Ebene gegenüberliegenden Vorsprüngen versehen, auf denen die Trennwand zur Unterteilung des Aufnahmeraums in die beiden Teilräume aufliegt. Erforderlichenfalls können den Vorsprüngen Rastorgane zugeordnet sein, die eine rastende, aber gleichwohl lösbare Verbindung der Trennwand mit dem Tragprofil ermöglichen. Dadurch wird ein Abheben der Trennwand von den als Auflager dienenden Vorsprüngen des Tragprofils beim Betrieb des Förderers vermieden. Alternativ kann die Trennwand mit den Vorsprüngen verschraubt sein.

Gemäß einer Weiterbildung der Erfindung ist einer Bodenwandung mindestens eines Teilraums eine Gleitschicht für das entsprechende Trum des Förderstrangs zugeordnet.

Vorzugsweise weisen eine solche Gleitschicht die Bodenwandungen beider Teilräume auf. In diesem Falle ist eine Gleitschicht auf der die beiden Seitenwände verbindenden Bodenwandung des Tragprofils angeordnet, während die andere Gleitschicht sich auf der Trennwand befindet. Die Gleitschichten sind vorzugsweise aus einem Führungsprofil im entsprechenden Teilraum gebildet. Dieses Führungsprofil kann den Boden des jeweiligen Teilraums ganz oder vollständig bedecken. Das oder jedes Führungsprofil ist wie die Trennwand als separates Teil in das Tragprofil einsetzbar. Die Führungsprofile sind entweder lose auf dem Boden des Tragprofils oder der Trennwand aufgelegt oder durch Rastverbindungen oder dergleichen am Tragprofil bzw. der Trennwand arretiert.

Weiterhin ist vorgesehen, dass die Führungsprofile gleichermaßen ausgebildet sind und eine Bodenwandung und zwei Randstreifen aufweisen. Die Randstreifen sind gegenüberliegenden Seitenwänden des Aufnahmeraums des Tragprofils zugeordnet, wodurch der im Tragprofil entlanglaufende Förderstrang auch seitlich mit einer Gleitschicht korrespondiert.

Gemäß einer bevorzugten Ausgestaltung der Erfindung sind die Randstreifen gegenüber der jeweiligen Bodenwandung verschwenkbar, vorzugsweise durch Scharniere zur Verbindung der Randstreifen mit der Bodenwandung. Diese Verschwenkbarkeit der Randstreifen gegenüber der Bodenwandung dient vorzugsweise dazu, die Führungsprofile rastend am Boden des jeweiligen Teilraums des Aufnahmeraums zu halten.

Es ist weiterhin vorgesehen, die Bodenwandung der Führungsprofile auf einer Seite mit einer in Längsrichtung vorzugsweise durchgehenden Vertiefung zu versehen. Diese Vertiefung ist so ausgebildet, dass sie gegenüber dem Kettenkörper der Staurollenkette nach unten vorstehende Abschnitte der Staurollen aufnimmt, ohne dass diese Abschnitte der Staurollen in Kontakt mit der Bodenwandung des jeweiligen Führungsprofils gelangen. Dadurch, dass eine solche Vertiefung nur einer Seite der Bodenwandung zugeordnet ist, kann je nach Relativanordnung der Führungsprofile im Tragprofil, nämlich entweder mit obenliegender Vertiefung oder mit untenliegender (verdeckter) Vertiefung, ein Antrieb der Staurollen beim Entlanglaufen derselben auf dem Führungsprofil erfolgen. Je nachdem, ob die Vertiefung an der Oberseite oder Unterseite der Bodenwandung liegt, müssen die Randstreifen, die üblicherweise gegenüber der Bodenwandung nach oben vorstehen, zur einen oder anderen Seite der Bodenwandung weisen. Dazu ermöglichen die Scharnierlinien zwischen der Bodenwandung und den Randstreifen ein Umklappen der Randstreifen um 180°, so dass sie wahlweise gegenüber einer Seite der Bodenwandung vorstehen. Auf diese Weise ist das Führungsprofil universell einsetzbar, und zwar sowohl für Fälle mit angetriebenen Staurollen als auch für Fälle mit nicht angetriebenen Staurollen.

Ein bevorzugtes Ausführungsbeispiel eines erfindungsgemäßen Förderers wird nachfolgend anhand der Zeichnung näher erläutert. In dieser zeigen:
- Fig. 1: eine perspektivische Darstellung eines Abschnitts eines Tragprofils mit noch nicht montierter Staurollenkette,
- Fig. 2: eine Ansicht gemäß Fig. 1 mit montierter Staurollenkette, und
- Fig. 3: einen Querschnitt durch das Tragprofil mit montierter Staurollenkette gemäß Fig. 2.

Die Figuren zeigen eine Art des erfindungsgemäßen Förderers, der als Staurollenförderer 10 ausgebildet ist. Ein solcher Förderer wird eingesetzt, um Werkstücke beispielsweise entlang einer Montagelinie weiterzutransportieren. Die Werkstücke sind dabei vorzugsweise auf Werkstückträgem angeordnet, die auf dem Staurollenförderer 10 aufliegen und von diesem durch die Montagelinie transportiert werden.

Der Staurollenförderer 10 verfügt über eine in den Figuren nicht gezeigte Förderstrecke, die vom Verlauf her individuell an die jeweilige Montagelinie angepaßt ist. Die Förderstrecke wird gebildet durch vorzugsweise mehrere längliche Tragprofile 11, die an ihren Enden durch Umlenkungen 12 und/oder Weichen 13 miteinander verbunden sind. Im Bereich der Umlenkungen 12 wird die Förderstrecke im Bogen geführt. Die Weichen 13 dienen dazu, die Förderstrecke zu verzweigen. Insbesondere im Bereich mindestens einiger Umlenkungen 12 erfolgt ein Antrieb eines Förderstrangs der Förderstrecke.

Der Förderstrang ist beim hier gezeigten Staurollenförderer 10 aus einer Staurollenkette 14 gebildet, die endlos ausgebildet ist und umlaufend entlang der Förderstrecke angetrieben wird. Die endlose Staurollenkette 14 verfügt über ein Obertrum 15 und ein Untertrum 16. Das Obertrum 15 dient zum Weitertransport der Werkstückträger mit den Werkstücken. Dazu liegen die Werkstückträger auf dem Obertrum 15 auf. Das Untertrum 16 dient zur Rückführung der endlosen Staurollenkette 14 zu einem Anfang der Förderstrecke und wird leer unter dem Obertrum 15 zurückgeführt, und zwar in einem Rückführkanal.

Die Staurollenkette 14 ist gebildet aus einer Vielzahl hintereinanderliegender Kettenteile 17. Die einzelnen, gleich ausgebildeten Kettenteile 17 sind gelenkig miteinander verbunden, und zwar im gezeigten Ausführungsbeispiel durch Kugelgelenkverbindungen 18. Jedem Kettenteil 17 ist eine längliche, zylindrische Staurolle 19 zugeordnet. Die Staurolle 19 ragt mit einem oberen und unteren Kreisabschnitt gegenüber einer Oberseite 20 und einer Unterseite 21 des jeweiligen Kettenteils 17 vor. Die Staurolle 19 ist um einen quergerichtet zur Längsachse der Staurollenkette 14 verlaufende, horizontale Drehachse 22 frei drehbar.

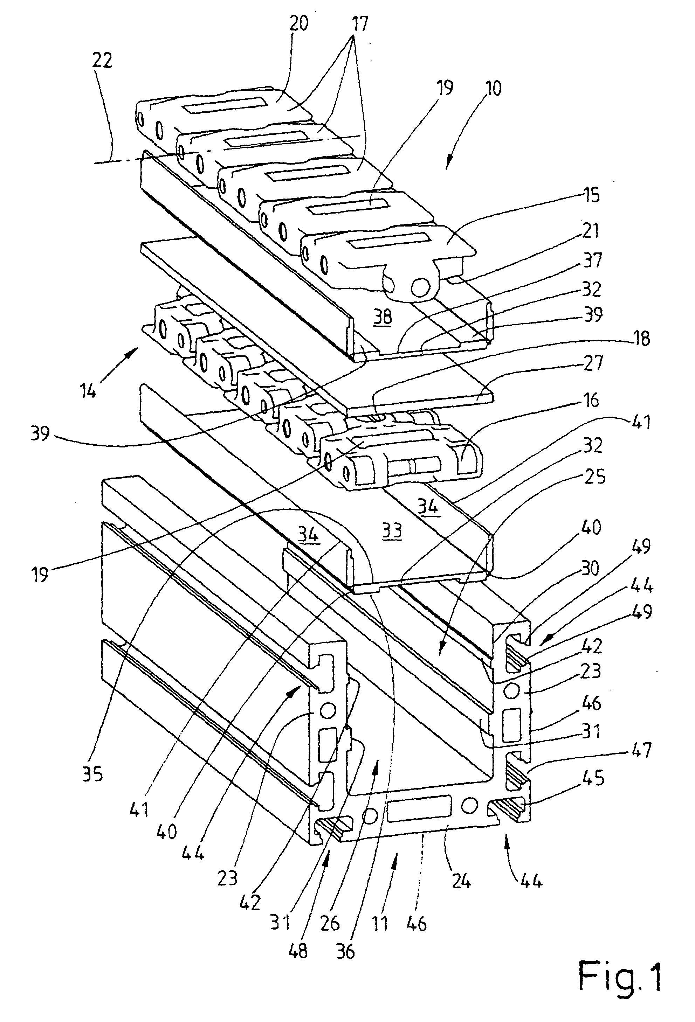

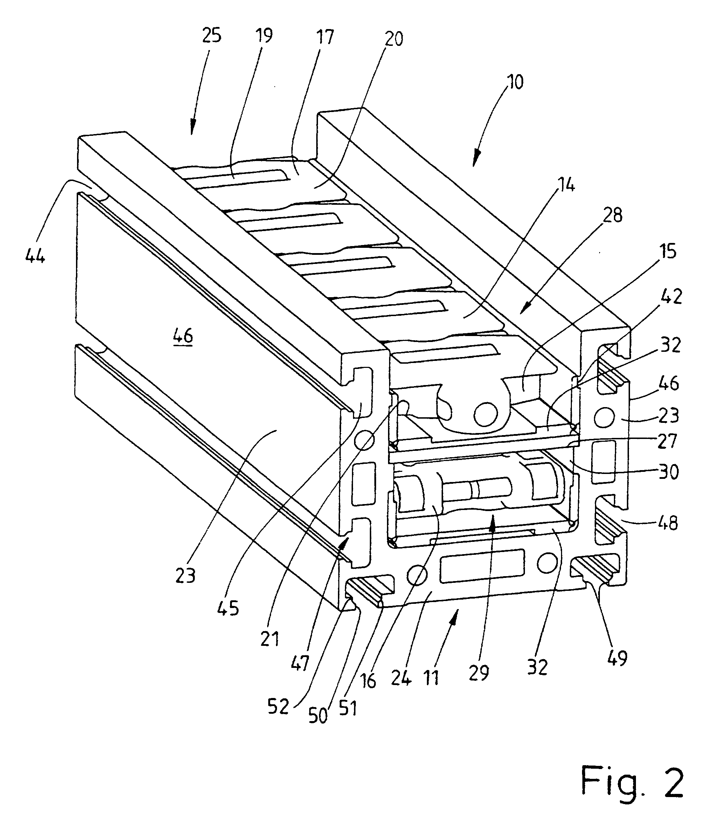

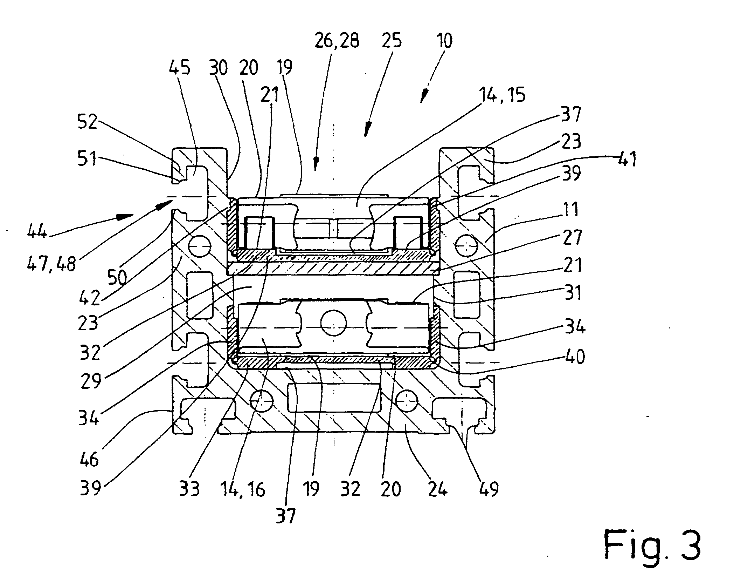

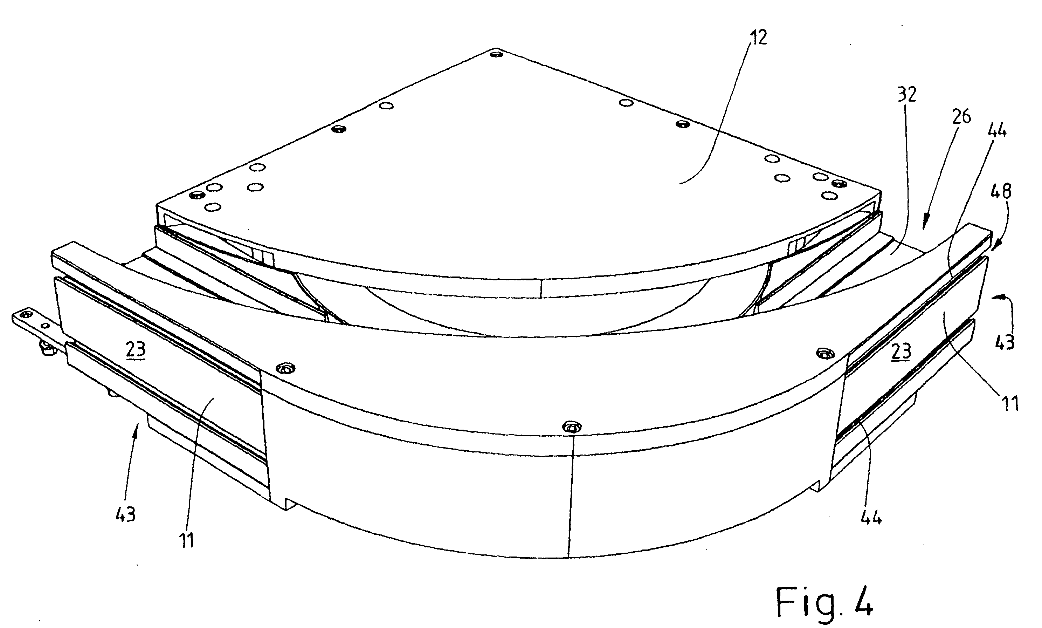

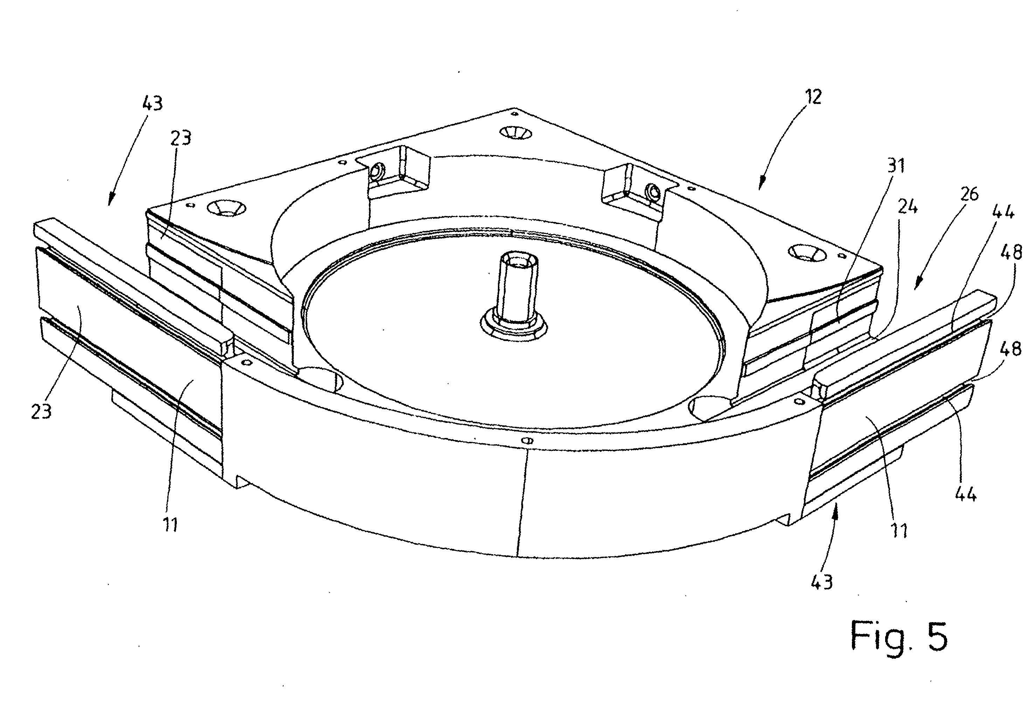

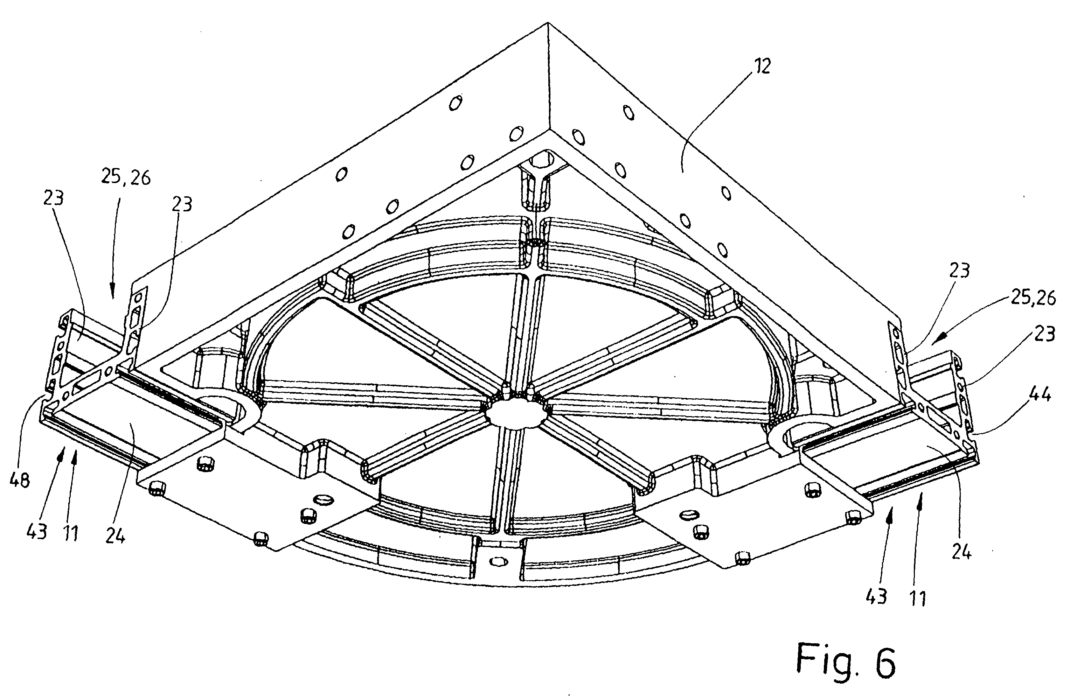

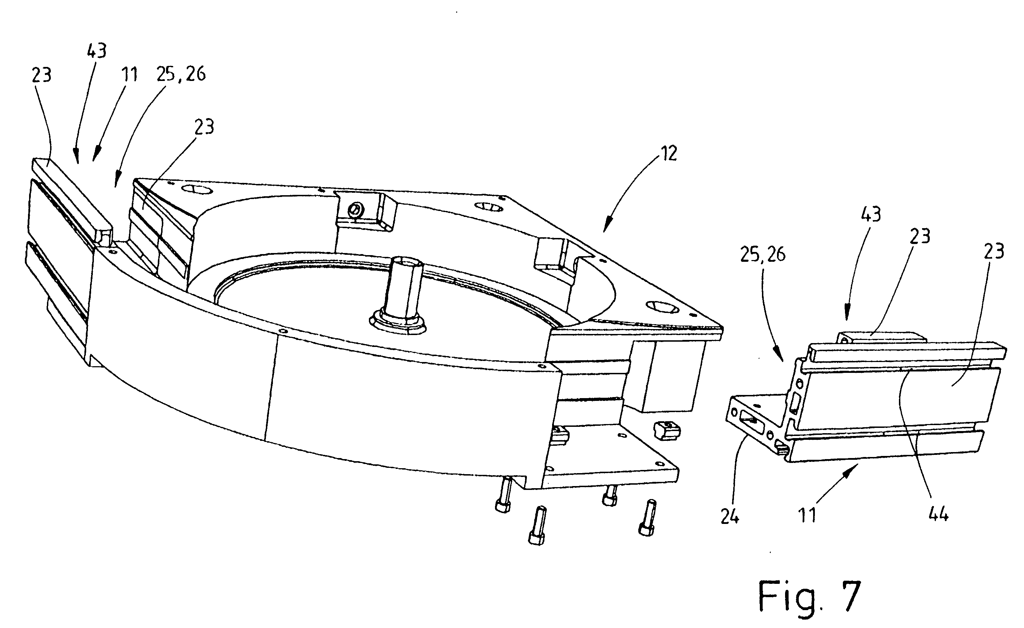

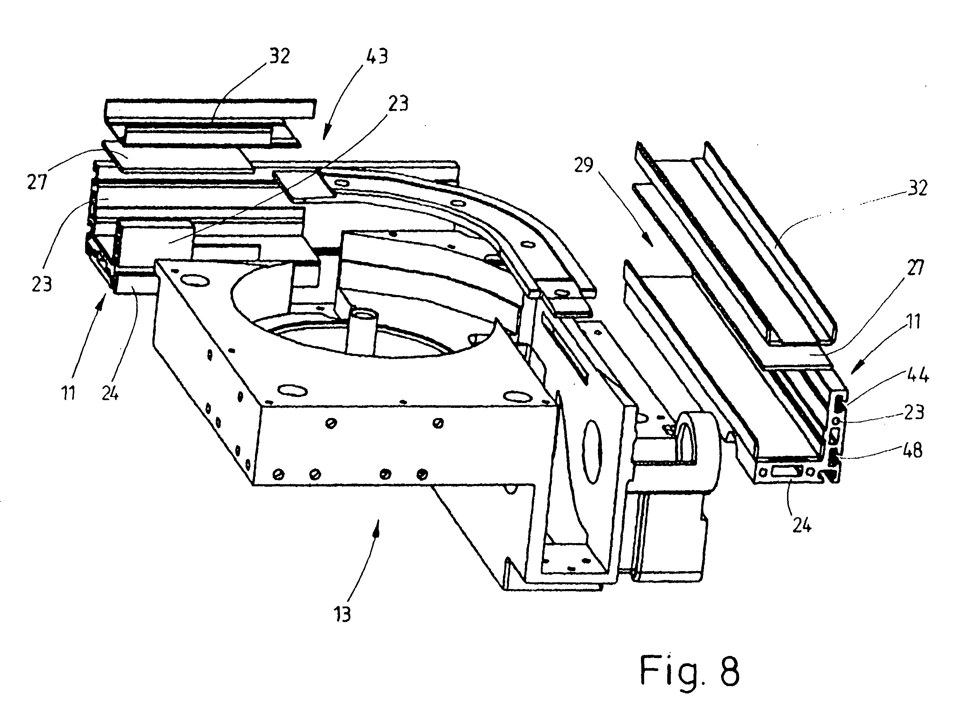

Von den allesamt gleich aufgebauten Tragprofilen 11 ist in den Fig. 1 bis 3 der Abschnitt eines Tragprofils 11 gezeigt. Das Tragprofil 11 verfügt über einen oben offenen, U-förmigen Querschnitt. Dazu wird das als einstückiges Strangpreßprofil aus beispielsweise Aluminium hergestellte Tragprofil 11 gebildet aus zwei parallelen Seitenwänden 23 und einer diese an der Unterseite verbindende Bodenwand 24. Zwischen den oberen Enden der beiden parallelen Seitenwände 23 befindet sich eine vollständig offene obere Seite 25. Zwischen den Seitenwänden 23 wird so ein von der offenen Seite 25 her zugänglicher Aufnahmeraum 26 gebildet. Im durchgehend offenen, einzigen Aufnahmeraum 26 des Tragprofils 11 finden das Obertrum 15 und das Untertrum 16 der Staurollenkette 14 übereinanderliegend Aufnahme, wobei sich das Untertrum 16 mit Abstand parallel verlaufend unter dem Obertrum 15 befindet.

Der Aufnahmeraum 26 wird etwa mittig unterteilt durch eine sich längs des Tragprofils 11 erstreckende, ebene Trennwand 27. Die Trennwand 27 bildet im Aufnahmeraum 26 des Tragprofils 11 zwei Teilräume 28 und 29. Der sich unter der Trennwand 27 befindende untere Teilraum 29 ist vollständig geschlossen. Er wird begrenzt durch Teile der parallelen Seitenwände 23, der Bodenwand 24 und der Trennwand 27. Oberhalb der Trennwand 27 befindet sich der obere Teilraum 28, der begrenzt wird von oberen Abschnitten der parallelen Seitenwände 23 und der Trennwand 27. Der obere Teilraum 28 ist durch die obere offene Seite 25 des Tragprofils 11 an seiner Oberseite offen. Im untere Teilraum 29 findet das Untertrum 16 Aufnahme, wodurch der untere Teilraum 29 den Rückführkanal für das Untertrum 16 bildet. Das Obertrum 15 der Staurollenkette 14 ist im oben offenen oberen Teilraum 28 angeordnet, und zwar so, dass auf der Oberseite 20 das Obetrum 15 der Werkstückträger oder ein anderer zu fördernder Gegenstand aufliegen kann.

Erfindungsgemäß ist die Trennwand 27 lösbar in den Aufnahmeraum 26 des Tragprofils 11 eingesetzt, und zwar durch die oben offene Seite 25 des Tragprofils 11. Die Trennwand 27 ruht auf gegenüber einer Innenseite 30 jeder Seitenwand 23 vorstehenden Vorsprung 31. Die zueinanderweisenden Vorsprünge 31 der gegenüberliegenden Seitenwände 23 verlaufen in Längsrichtung des Tragprofils 11 durchgehend und verfügen über einen gleichen Abstand zur Bodenwandung 24. Auf diese Weise verläuft die auf den Vorsprüngen 31 aufliegende Trennwand 27 parallel zur Bodenwandung 24.

Durch die lösbare Anordnung der Trennwand 27 im Aufnahmeraum 26 des Tragprofils 11 ist bei entfernter Trennwand 27 auch der untere Teilraum 29 offen, nämlich von der offenen Seite 25 an der Oberseite des Tragprofils 11 her zugänglich. Dadurch ist der untere Teilraum 29 im Tragprofil auch von der oberen, offenen Seite 25 her zugänglich zum Einlegen des Untertrums 16 der Staurollenkette 14 in den Aufnahmeraum 26 des Tragprofils 11, wenn die Trennwand 27 aus dem Tragprofil 11 herausgenommen ist (Fig. 1). Nach dem Einlegen des Untertrums 16 in den Aufnahmeraum 26 des Tragprofils 11 wird die Trennwand 27 in das Tragprofil 11 eingesetzt und dadurch einerseits der unteren Teilraum 29 im Tragprofil 11 geschlossen und andererseits eine zumindest indirekte Auflage für das anschließend ins Tragprofil 11 einzulegende Obertrum 15 der Staurollenkette 14 geschaffen.

Die Staurollenkette 14 gleitet im Tragprofil 11 auf Führungsprofilen 32. Sowohl dem Untertrum 16 als auch dem Obertrum 15 ist ein Führungsprofil 32 zugeordnet. Die Führungsprofile 32 für das Obertrum 15 und das Untertrum 16 sind gleich ausgebildet. Jedes Führungsprofil 32 verfügt über eine Bodenwandung 33 und gegenüberliegenden Rändern derselben zugeordnete Randstreifen 34. Die Randstreifen 34 stehen gegenüber der Bodenwandung 33 senkrecht gerichtet nach oben und verfügen über eine Höhe, die etwa der Höhe der Staurollenkette 14 entspricht. Die Randstreifen 34 dienen zur seitlichen Führung der gegenüberliegenden Ränder der Staurollenkette 14. Auf der Bodenwandung 33 stützt sich die Staurollenkette 14 ab.

Gegenüberliegende Bodenflächen 35, 36 der Bodenwandung 33 des Führungsprofils 32 sind unterschiedlich ausgebildet. Eine Bodenfläche 35 verläuft geradlinig über den gesamten Querschnitt des Führungsprofils 32. Die gegenüberliegende Bodenfläche 36 ist hingegen mit einer mittigen Vertiefung 37 versehen. Diese Vertiefung 37 ist etwas breiter als die Länge der Staurolle 19. Die Vertiefung 37 ist gegenüber der Bodenfläche 36 soweit zurückversetzt, dass in der Vertiefung 37 ein gegenüber der Staurollenkette 14 vorstehende Abschnitt der Staurollen eintreten kann, ohne dass sich dabei die Mantelfläche der Staurollen 19 auf der gegenüber der Bodenfläche 36 zurückversetzten Grundfläche 38 der Vertiefung 37 abwälzen kann. Es gleitet dadurch die Staurollenkette 14 mit einer Seite (Oberseite 20 bzw. Unterseite 21) der Kettenteile 17 auf gegenüber liegenden Randbereichen 39 neben der Vertiefung 37 der Bodenfläche 36 des Führungsprofils 32 entlang. Auf der durchgehenden, glatten Bodenfläche 35 liegen die Mantelflächen der Staurollen 19 auf, so dass sich die Staurollen 19 auf der Bodenfläche 35 abwälzen. Im gezeigten Ausführungsbeispiel ist dem Obertrum 15 ein Führungsprofil 32 mit obenliegender Bodenfläche 36 zugeordnet. Dadurch ragen die Staurollen 19 mit ihren gegenüber der Unterseite 21 der Kettenteile 17 vorstehenden Abschnitten in die Vertiefung 37 hinein, so dass beim Entlangbewegen des Obertrums 15 der Staurollenkette 14 auf dem (oberen) Führungsprofil 32 die Staurollen 19 stillstehen. Hingegen ist dem Untertrum 16 ein Führungsprofil 32 mit obenliegender glatter Bodenfläche 35 zugeordnet, wodurch beim Weiterbewegen des Untertrums 16 auf dem Führungsprofil 32 sich die Staurollen 19 auf der Bodenfläche 35 abwälzen und dadurch das Untertrum 16 rollend auf dem unteren Führungsprofil 32 entlangbewegbar ist.

Die Randstreifen 34 sind mit gegenüberliegenden Rändern der Bodenwandung 33 des Führungsprofils 32 gelenkig verbunden. Dazu sind im gezeigten Ausführungsbeispiel zwischen den Randstreifen 34 und der Bodenwandung 33 in Längsrichtung des Führungsprofils 32 durchgehende Filmscharniere 40 vorgesehen. Die Filmscharniere 40 werden bei der Herstellung des einstückigen Führungsprofils 32 gebildet, indem das Führungsprofil 32 aus thermoplastischem Kunststoff extrudiert wird. Beim thermoplastischen Kunststoff zur Bildung des Führungsprofils 32 handelt es sich um einen solchen, der gute Gleiteigenschaften und einen geringen Verschleiß aufweist. Dadurch kann die Staurollenkette 14 mit geringem Reibwiderstand auf den Randbereichen 39 der Bodenwandung 33 des entsprechenden Führungsprofils 32 entlanggleiten. Auch die gegenüberliegenden Ränder der Staurollenkette 14 können so mit geringem Reibwiderstand an den Randstreifen 34 des Führungsprofils 32 entlanggleiten.

Die Führungsprofile 32 sind rastend im Aufnahmeraum 26 des Tragprofils 11 gehalten. Dazu werden obere Ränder 41 der Randstreifen 34 des dem unteren Teilraum 29 zugeordneten Führungsprofils 32 unter den als Auflager für die Trennwand 27 dienenden Vorsprüngen 31 festgerastet. Die oberen Ränder 41 der Randstreifen 34 des dem oberen Teilraum 28 zugeordneten Führungsprofils 32 sind rastend unter separaten Haltenasen 42 an den Seitenwänden 23 des Tragprofils 11 befestigt. Diese Haltenasen 42 befinden sich mit parallelem Abstand über den Vorsprüngen 31 der Seitenwände 23. Die Haltenasen 42 ragen gegenüber den Seitenwänden 23 weniger weit vor als die Vorsprünge 31, so dass die Trennwand 27 an den Haltenasen 42 vorbei durch die offene Seite 25 des Tragprofils 11 hindurch auf den Vorsprüngen 31 aufgelegt werden kann.

Das hier gezeigte Tragprofil 11 verfügt sowohl in der Bodenwand 24 als auch in jeder Seitenwand 23 über zwei mit Abstand voneinander angeordnete, gleichermaßen ausgebildete Nuten 44. Die jeweilige Nut 44 ist mit einem T-förmigen Querschnitt versehen. Ein quergerichteter Schenkel 45 der T-förmigen Nut 44 liegt im Inneren der jeweiligen Seitenwand 23 oder Bodenwand 24, und zwar parallel zur Außenfläche 46 verlaufend. Ein quergerichtet zum Schenkel 45 verlaufender Steg 47 der T-förmigen Nut 44 verbindet die Nut 44 mit der jeweiligen Außenfläche 46. Dort, wo der Steg 47 der jeweiligen Nut 44 in der Außenfläche 46 mündet, entsteht ein in Längsrichtung des Tragprofils 11 verlaufender, außen offener Schlitz 48.

Die den Steg 47 an gegenüberliegenden Seiten begrenzenden Stegseitenwandungen 49 zwischen der Außenfläche 46 der Seitenwände 23 bzw. der Bodenwand 24 und dem jeweiligen Schenkel 45 der Nut 44 sind erfindungsgemäß gestuft ausgebildet. Die Stufen sind so ausgebildet, dass sich die Stegseitenwandungen 49 zur Innenseite des Tragprofils 11 hin, also zum jeweiligen Schenkel 45 der Nut 44, erweitern. Demzufolge schließen an die jeweilige Außenfläche 46 zwei parallele Seitenwandteile 50 an. Darauf folgen schräg oder gegebenenfalls auch parallel zu den Seitenwandteilen 50 verlaufende Stufenstreifen 51. An die Stufenstreifen 51 wiederum schließen sich zwei parallele Seitenwandteile 52 an, deren Abstand zueinander größer ist als der Abstand der äußeren Seitenwandteile 50. Die inneren (weiter auseinanderliegenden) Seitenwandteile 52 gehen über in den Schenkel 45 der Nut 44.

Durch die gestufte Ausbildung des Stegs 47 der jeweiligen Nut 44 einerseits und den größeren Schenkel 45 der Nut 44 andererseits lassen sich unterschiedliche Befestigungsmittel, insbesondere Nutensteine mit unterschiedlich breiten Köpfen, in der Nut 44 verschiebbar, aber unverdrehbar, anordnen.

### Bezugszeichenliste:

- 10: Staurollenförderer
- 11: Tragprofil
- 12: Umlenkung
- 13: Weiche
- 14: Staurollenkette
- 15: Obertrum
- 16: Untertrum
- 17: Kettenteil
- 18: Kugelgelenkverbindung
- 19: Staurolle
- 20: Oberseite
- 21: Unterseite
- 22: Drehachse
- 23: Seitenwand
- 24: Bodenwand
- 25: offene Seite
- 26: Aufnahmeraum
- 27: Trennwand
- 28: oberer Teilraum
- 29: unterer Teilraum
- 30: Innenseite
- 31: Vorsprung
- 32: Führungsprofil
- 33: Bodenwandung
- 34: Randstreifen
- 35: Bodenfläche
- 36: Bodenfläche
- 37: Vertiefung
- 38: Grundfläche
- 39: Randbereich
- 40: Filmschamier
- 41: oberer Rand
- 42: Haltenase
- 43: Ende
- 44: Nut
- 45: Schenkel
- 46: Außenfläche
- 47: Steg
- 48: Schlitz
- 49: Stegseitenwandung
- 50: Seitenwandteil
- 51: Stufenstreifen
- 52: Seitenwandteil

## Patentansprüche

1. Förderer, insbesondere Staurollenförderer(10), für Werkstücke, Werkstückträger oder sonstige Gegenstände, mit einem wenigstens teilweise eine Förderstrecke bildenden Tragprofil (11) und einem vom Tragprofil (1.1) geführten, umlaufend angetriebenen Förder strang, insbesondere eine Staurollenkette (14), wobei im Tragprofil (11) ein Aufnahmeraum (26) für den Förderstrang, insbesondere die Staurollenkette (14), gebildet ist, der einen unteren Teilraum (29) für ein Untertrum (16) und einen darüber liegenden oberen Teilraum (28) für ein Obertrum (15) des Förderstrangs, aufweist, **dadurch gekennzeichnet, dass** das Tragprofil (11) eine zum Einsetzen des Förderstrangs in den Aufnahmeraum (26) ausgebildete offene Längsseite (25) aufweist und im Aufnahmeraum (26) eine Trennwand (27) herausnehmbar angeordnet ist, die den Aufnahmeraum (26) in den oberen Teilraum (28) und den unteren Teilraum (29) unterteilt zum Einsetzen des Untertrums (16) und des Obertrums (15) durch die offene Längsseite (25) des Tragprofils (11) in den unteren Teilraum (29) und den oberen Teilraum (28) im Tragprofil (11).

2. Förderer nach Anspruch 1, **dadurch gekennzeichnet, dass** der untere Teilraum (29) zur Aufnahme des Untertrums (16) des Förderstrangs von der offenen Längsseite (25) des Aufnahmeraums (26) des Tragprofils (11) her zugänglich ist, wobei der untere Teilraum (29) durch die Trennwand (27) verschließbar ist.

3. Förderer nach Anspruch 1, **dadurch gekennzeichnet, dass** die Trennwand (27) eine Bodenwandung des oberen Teilraums (28) des Tragprofils (11) bildet und einer der Trennwand (27) gegenüberliegenden Oberseite des oberen Teilraums (28) die offene, vorzugsweise obere Längsseite (25) des Tragprofils (11) zugeordnet ist.

4. Förderer nach Anspruch 1, **dadurch gekennzeichnet, dass** die den Aufnahmeraum (26) im Tragprofil (11) in die beiden Teilräume (28, 29) unterteilende Trennwand (27) auf Vorsprüngen (31) an gegenüberliegenden (aufrechten) Seitenwänden (23) des Tragprofils (11) vorzugsweise lose aufliegt.

5. Förderer nach Anspruch 3, **dadurch gekennzeichnet, dass** einer Bodenwandung mindestens eines Teilraums (28, 29) eine Gleitschicht für das Obertrum (15) und/oder das Untertrum (16) des Förderstrangs zugeordnet ist, wobei die oder jede Gleitschicht aus einem Führungsprofil (32) im entsprechenden Teilraum (28, 29) gebildet ist.

6. Förderer nach Anspruch 5, **dadurch gekennzeichnet, dass** jedes Führungsprofil (32) eine Bodenwandung (33) und gegenüberliegenden Seiten derselben zugeordnete Randstreifen (34) aufweist, wobei die Randstreifen (34) gegenüberliegenden Seitenwänden (23) des Aufnahmeraums (26) des Tragprofils (11) zugeordnet sind.

7. Förderer nach Anspruch 6, **dadurch gekennzeichnet, dass** die Randstreifen (34) gegenüber der Bodenwandung (33) verschwenkbar sind, vorzugsweise um Scharnierlinien zur Verbindung der Randstreifen (34) mit gegenüberliegenden Längerändem der Bodenwandung (33).

8. Förderer nach Anspruch 6, **dadurch gekennzeichnet, dass** die Bodenwandung (33) auf einer Seite eine in Längsrichtung des Führungsprofils (32) vorzugsweise durchgehend verlaufenden Vertiefung (37) aufweist.

9. Förderer nach Anspruch 5 oder 8, **dadurch gekennzeichnet, dass** das Führungsprofil (32) aus einem Material, insbesondere einem thermoplastischem Kunststoff, gebildet ist, das einen geringeren Reibwert als das Material des Tragprofils (11) aufweist.

## Claims

1. A conveyor, in particular an accumulating roller conveyor (10) for workpieces, workpiece holders or other objects, with a profile section (11), which forms at least in part a conveyor path, and a continuously driven conveyor strand, in particular an accumulating roller chain (14), guided by said profile section (11), with a receiving space (26) for the conveying strand, in particular the accumulating roller chain (14), being formed in the profile section (11), said receiving space (26) having a lower sectional space (29) for a bottom belt (16) and an upper sectional space (28) lying above it for a top belt (15) of the conveyor strand, **characterized in that** the profile section (11) has an open long side (25) designed for inserting the conveyor strand into the receiving space (26) and that arranged in the receiving space (26) is a removable dividing plate (27) which divides the receiving space (26) into the upper sectional space (28) and the lower sectional space (29) for the purpose of inserting the bottom belt and the top belt (15) through the open long side (25) of the profile section (11) into the lower sectional space (29) and the upper sectional space (28) in the profile section (11).

2. Conveyor according to Claim 1, **characterized in that** lower sectional space (29) for receiving the bottom belt (16) of the conveyor strand is accessible from the open long side (25) of the receiving space (26) in the profile section (11 ), it being possible for the lower sectional space (29) to be closed by the dividing plate (27).

3. Conveyor according to Claim 1, **characterized in that** the dividing plate (27) forms a bottom wall of the upper sectional space (28) of the profile section (11) and a top side of the upper sectional space (28) opposite the dividing plate (27) is assigned to the open, preferably top long side (25) of the profile section (11).

4. Conveyor according to Claim 1, **characterized in that** the dividing plate (27) separating the receiving space (26) in the profile section (11) into the two sectional spaces (28, 29) lies, preferably unattached, on opposing (upright) side walls (23) of the profile section (11).

5. Conveyor according to Claim 3, **characterized in that** a bottom wall (33) of at least one sectional space (28, 29) is assigned a sliding layer for the top belt (15) and/or the lower belt (16) of the conveyor strand, the or each sliding layer being formed by a guide profile (32) in the corresponding sectional space (28, 29).

6. Conveyor according to Claim 5, **characterized in that** each guide profile (32) has edge strips (34) assigned to a bottom wall (33) and opposing sides of same, with the edge strips (34) being assigned opposing side walls (23) of the receiving space (26) of the profile section (11).

7. Conveyor according to Claim 6, **characterized in that** the edge strips (34) can be pivoted with respect to the bottom wall (33), preferably about hinge lines for connecting the edge strips (34) to opposing long edges of the bottom wall (33).

8. Conveyor according to Claim 6, **characterized in that** the bottom wall (33) has on one side a continuous recess (37) running in the longitudinal direction of the guide profile (32).

9. Conveyor according to Claim 5 or 8, **characterized in that** the guide profile (32) is made of a material, in particular thermoplastic synthetic material, which has a lower frictional value than the material of the profile section (11).

## Revendications

1. Convoyeur, en particulier convoyeur à rouleaux d'accumulation (10), pour pièces, supports de pièces ou autres objets, comportant un profilé support (11) formant au moins partiellement une voie de transport et un cordon transporteur soumis à rotation et guidé par le profilé support (11), en particulier une chaîne à rouleaux d'accumulation (14), dans le profilé support (11) étant formé un espace récepteur (26) qui est destiné à recevoir le cordon transporteur, en particulier la chaîne à rouleaux d'accumulation (14), et présente un espace partiel inférieur (29) pour un brin inférieur (16) du cordon transporteur et un brin supérieur situé au-dessus (28) pour un brin supérieur (15) du cordon transporteur, **caractérisé par le fait que** le profilé support (11) présente un côté longitudinal ouvert (25) fait pour l'introduction du cordon transporteur dans l'espace récepteur (26), et dans l'espace récepteur (26) est montée une cloison amovible (27) qui divise celui-ci en l'espace partiel supérieur (28) et l'espace récepteur inférieur (29) pour l'introduction du brin inférieur (16) et du brin supérieur (15) par le côté longitudinal ouvert (25) du profilé support (11) dans l'espace partiel inférieur (29) et l'espace partiel supérieur (28) du profilé support (11).

2. Convoyeur selon la revendication 1, **caractérisé par le fait que** l'espace partiel inférieur (29) destiné à recevoir le brin inférieur (16) du cordon transporteur est accessible depuis le côté longitudinal ouvert (25) de l'espace récepteur (26) du profilé support (11), l'espace partiel inférieur (29) pouvant être fermé par la cloison (27).

3. Convoyeur selon la revendication 1, **caractérisé par le fait que** la cloison (27) forme une paroi de fond de l'espace partiel supérieur (28) du profilé support (11), et à un côté supérieur opposé à la cloison (27) de l'espace partiel supérieur (28) est associé le côté longitudinal ouvert, de préférence supérieur (25) du profilé support (11).

4. Convoyeur selon la revendication 1, **caractérisé par le fait que** la cloison (27) qui divise l'espace récepteur (26) du profilé support (11) en les deux espaces partiels (28, 29) repose de préférence librement sur des saillies (31) prévues sur des parois latérales opposées (verticales) (23) du profilé support (11).

5. Convoyeur selon la revendication 3, **caractérisé par le fait qu'**à une paroi de fond d'au moins un espace partiel (28, 29) est adjointe une couche de glissement pour le brin supérieur (15) et/ou le brin inférieur (16) du cordon transporteur, la ou chaque couche de glissement étant formée d'un profilé de guidage (32) dans l'espace partiel correspondant (28, 29).

6. Convoyeur selon la revendication 5, **caractérisé par le fait que** chaque profilé de guidage (32) présente une paroi de fond (33) et des bandes de bord (34) associées à des côtés opposés de celle-ci, les bandes de bord (34) étant associées à des parois latérales opposées (23) de l'espace récepteur (26) du profilé support (11).

7. Convoyeur selon la revendication 6, **caractérisé par le fait que** les bandes de bord (34) peuvent basculer par rapport à la paroi de fond (33), de préférence autour de lignes charnières joignant les bandes de bord (34) à des bords longitudinaux opposés de la paroi de fond (33).

8. Convoyeur selon la revendication 6, **caractérisé par le fait que** la paroi de fond (33) présente sur un côté un creux (37) qui s'étend de préférence de façon continue dans la direction longitudinale du profilé de guidage (32).

9. Convoyeur selon l'une des revendications 5 et 8, **caractérisé par le fait que** le profilé de guidage (32) est formé d'une matière, en particulier d'un thermoplastique, qui présente un plus faible coefficient de frottement que la matière du profilé support (11).
